# EUROPÄISCHE PATENTSCHRIFT

(11) **EP 2 875 626 B1**
(45) Veröffentlichungstag und Bekanntmachung des Hinweises auf die Patenterteilung: **06.04.2016**
(21) Anmeldenummer: 14727405.4
(22) Anmeldetag: 26.05.2014
(51) Int. Cl.: H04M 3/42, H04M 7/00

(54) **VERFAHREN UND ANORDNUNG ZUM AUFBAU EINER TELEKOMMUNIKATIONSVERBINDUNG**
METHOD AND SYSTEM FOR ESTABLISHING A TELECOMMUNICATIONS LINK
PROCÉDÉ ET DISPOSITIF POUR ÉTABLIR UNE LIAISON DE TÉLÉCOMMUNICATION

(30) Priorität: 24.05.2013 DE 102013008932
(43) Veröffentlichungstag der Anmeldung: 27.05.2015
(73) Patentinhaber: Unify GmbH & Co. KG, 81379 Munich (DE)
(72) Erfinder: RIST, Claus, 44797 Bochum (DE); GLASER, Martin, 59192 Bergkamen (DE); VOLKMANN, Michael, 58313 Herdecke (DE)
(74) Vertreter: Fritzsche, Thomas
(86) Internationale Anmeldenummer: PCT/EP2014/001414
(87) Internationale Veröffentlichungsnummer: WO 2014/187572

(56) Entgegenhaltungen:
- EP-A2- 1 395 024
- DE-A1- 10 159 636

## Beschreibung

Die Erfindung betrifft ein Verfahren und eine Anordnung zum Aufbau einer Telekommunikationsverbindung für einen Anwender, dem ein erstes Kommunikationsendgerät zugeordnet ist, gemäß dem Oberbegriff des Anspruchs 1 bzw. 9.

Die Integration von Telekommunikationsnetzen und Datennetzen gewinnt zunehmend an Bedeutung. Telekommunikationsnetze dienen hauptsächlich der Kommunikation von Telekommunikationsteilnehmern mit Hilfe von Telekommunikationsendgeräten wie beispielsweise Telefonen. Datennetze dienen hauptsächlich der Vernetzung von Computern, beispielsweise von PCs mit sogenannten Servern. Verfahren und Anordnungen, bei denen auf Computern installierte Anwendungen Kommunikationsanlagen und Kommunikationsverbindungen steuern und überwachen, sind allgemein als CTI-Lösungen (CTI = Computer Telephony Integration) bekannt. Dabei können einerseits Anschlüsse von Kommunikationsanlagen und andererseits Verbindungen zwischen den Anschlüssen gesteuert und überwacht werden. Bei den Verbindungen handelt es sich jeweils um temporäre Kommunikationskanäle zwischen zwei oder mehreren Teilnehmern einer Kommunikationsanlage oder mehrerer Kommunikationsanlagen.

Beim Betrieb einer CTI-Lösung werden jeweils Daten mit Steuer- und Zustandsinformationen zwischen einer Kommunikationsanlage und einer CTI-Anwendung (CTI-Anwendungsprogramm) übertragen. Dazu verfügen die Kommunikationsanlagen über spezielle Schnittstellen zum Austausch der Daten, die CTI-Schnittstellen. Ebenso verfügen die Anwendungen bzw. die PCs über eine entsprechende CTI-Schnittstelle für diesen Datenaustausch. Hierzu sind die CTI-Schnittstellen der Kommunikationsanlage und die der Anwendung über eine Datenleitung oder über ein Datennetz miteinander verbunden. Da die maximale Anzahl von CTI-Schnittstellen an einer Kommunikationsanlage beschränkt ist, wird zwischen die Kommunikationsanlage und die Anwendungen häufig ein Telefonie-Server geschaltet.

Die Druckschrift WO 98/51092 A1 "Computer telephony integration gateway" zeigt ein öffentliches Kommunikationsnetzwerk mit mehreren Kommunikationsanlagen und ein privates Kommunikationsnetzwerk mit mehreren Domänen, die jeweils Rechner mit Anwendungen zur Steuerung und/oder Überwachung von Ressourcen des öffentlichen Kommunikationsnetzwerks aufweisen. Die gezeigte Anordnung weist als Umwertungseinrichtung ein "CTI-Gateway" auf, welches die zur Steuerung und/oder Überwachung der Ressourcen vom öffentlichen Kommunikationsnetzwerk zum privaten Kommunikationsnetzwerk versendeten Daten derart verändert, dass sich diese Daten als die Daten einer einzigen öffentlichen Kommunikationsanlage darstellen, und umgekehrt die Daten, die vom privaten Kommunikationsnetzwerk mit den Anwendungen zum öffentlichen Kommunikationsnetzwerk versendet werden, derart verändert, als ob sie aus einem privaten Kommunikationsnetzwerk mit nur einer Anwendung gesendet worden wären.

Die DE 101 59 636 B4 beschreibt ein Verfahren gemäß dem Oberbegriff des Anspruchs 1 zur Steuerung und/oder Überwachung von Ressourcen und Verbindungen mittels Austausch von Daten zwischen Kommunikationsanlagen und mindestens einer Anwendung, wobei die Daten jeweils ein die Ressourcen und Verbindungen unterscheidendes Kennzeichen aufweisen, wobei die Kennzeichen der Ressourcen beim Austausch jeweils derart umgewertet werden, dass sie sich für die eine oder jede Anwendung als Kennzeichen einer einzigen Kommunikationsanlage mit Teilnehmeranschlüssen darstellen, dadurch gekennzeichnet, dass die Kennzeichen der Verbindung zwischen Ressourcen von verschiedenen Kommunikationsanlagen jeweils eine lokale Verbindungsnummer (Call-ID) der an der Verbindung beteiligten Kommunikationsanlagen und eine globale Verbindungsnummer (Call-ID) umfassen, und dass durch die Umwertung die globale Verbindungsnummer (Call-ID) so zur Anwendung übertragen wird, dass diese von der Anwendung nicht von einer lokalen Verbindungsnummer (Call-ID) unterscheidbar ist.

Unter CTI-Leistungsmerkmalen sind sogenannte Preferred-Device-Applikationen schon verfügbar, damit der Anwender dynamisch ein Endgerät (Preferred Device) festlegen kann, an dem er ab einem festlegbaren Zeitpunkt unter seiner Büronummer kommende und gehende Rufe tätigt, ohne sich im Büro zu befinden. Dieses Preferred Device ist örtlich unabhängig und kann sich im eigenen Knoten, im Netzverbund oder auch im Central Office befinden.

Beispielsweise sind dem One Number Service als Preferred-Device-Applikationen (htta://wiki.siemens-enterprise.com/wiki/ONS) der OpenScape Voice bekannt. Bei dieser Applikation muss zur Durchführung von Leistungsmerkmalen während des One Number Service die Applikation komplexe Kenntnis darüber haben, an welches Preferred Device die Büronummer aktuell gebunden ist.

Ähnliche Leistungsmerkmale sind mit dem CallMe-Service der OpenScape Office (http://wiki.siemens-enterprise.com/wiki/HiPath OpenOffice ME Versionsunterschiede MR4 im Detail) verfügbar. Jedoch sind bei OpenScape Office Leistungsmerkmale wie Rückfrage, Makeln, Übergeben, Gesprächaufzeichnungen usw. während des CallMe-Service nicht möglich.

Bei sogenannten Preferred-Device-Applikationen wie dem One Number Service der OpenScape Voice und dem CallMe-Service der OpenScape Office kann der Anwender dynamisch ein Endgerät (Preferred Device) festlegen, an dem er ab einem festlegbaren Zeitpunkt unter seiner Büronummer kommende und gehende Rufe tätigt, ohne sich im Büro zu befinden. Dieses Preferred Device ist örtlich unabhängig und kann sich im eigenen Knoten, im Netzverbund oder auch im Central Office befinden.

Bisher werden Leistungsmerkmale wie Rückfrage, Makeln, Übergeben usw. für eine Preferred-Device-Konstellation mittels CTI derart realisiert, wobei die das Leistungsmerkmal steuernde Applikation Kenntnis über das Preferred Device haben muss.

Eine Aufgabe der vorliegenden Erfindung kann darin gesehen werden, eine Lösung anzubieten, die es nun auch High-Level-Applikationen erlaubt, ohne komplexe Kenntnis des jeweiligen - dynamisch änderbaren - Preferred Device Leistungsmerkmale auf einfache Art und Weise mittels CTI durchzuführen. Diese Aufgabe wird durch ein Verfahren bzw. eine Anordnung nach einem der unabhängigen Patentansprüche gelöst. Vorteilhafte Weiterbildungen der Erfindung sind Gegenstand von Unteransprüchen.

Erfindungsgemäß ist ein Verfahren zum Aufbau einer Telekommunikationsverbindung für einen Anwender vorgesehen, dem ein erstes Kommunikationsendgerät zugeordnet ist, umfassend die folgenden Schritte: einem auf wenigstens einem CTI-Server für den Aufbau der Telekommunikationsverbindung laufenden Steuerprogramm wird eine Zuordnungsinformation bereitgestellt, in der für das erste Kommunikationsendgerät nach Maßgabe des Anwenders eine erste Zuordnung bestimmt ist, die eine Zuordnung eines zweiten Kommunikationsendgeräts zu dem ersten Kommunikationsendgerät festlegt; und die Telekommunikationsverbindung wird von dem Steuerprogramm gemäß der ersten Zuordnung mit dem zweiten Kommunikationsendgerät anstelle mit dem ersten Kommunikationsendgerät aufgebaut; dadurch gekennzeichnet, dass in der Zuordnungsinformation eine zweite Zuordnung bestimmt wird, wodurch dem Steuerprogramm das erste Kommunikationsendgerät als in der aufgebauten Telekommunikationsverbindung von dem Anwender einzig verwendetes Endgerät signalisiert wird.

Gemäß einer vorteilhaften Ausführungsform der Erfindung, deren Merkmale auch mit Merkmalen anderer Ausführungsformen dieser Erfindung kombiniert werden können, ist es vorgesehen, dass der wenigstens eine CTI-Server eine Eingabe von einem Anwender empfängt, die das zweite Kommunikationsendgerät des Anwenders bestimmt.

Gemäß einer vorteilhaften Ausführungsform der Erfindung, deren Merkmale auch mit Merkmalen anderer Ausführungsformen dieser Erfindung kombiniert werden können, ist es vorgesehen, dass das zweite Kommunikationsendgerät ein Preferred Device umfasst.

Gemäß einer vorteilhaften Ausführungsform der Erfindung, deren Merkmale auch mit Merkmalen anderer Ausführungsformen dieser Erfindung kombiniert werden können, ist es vorgesehen, dass der zumindest eine CTI-Server eine Datenstruktur abruft, die für das erste Kommunikationsendgerät die erste Zuordnung bestimmt.

Gemäß einer vorteilhaften Ausführungsform der Erfindung, deren Merkmale auch mit Merkmalen anderer Ausführungsformen dieser Erfindung kombiniert werden können, ist es vorgesehen, dass in der ersten Zuordnung das zweite Kommunikationsendgerät in Zusammenhang mit dem ersten Kommunikationsendgerät festgelegt wird.

Gemäß einer vorteilhaften Ausführungsform der Erfindung, deren Merkmale auch mit Merkmalen anderer Ausführungsformen dieser Erfindung kombiniert werden können, ist es vorgesehen, dass das erste Kommunikationsendgerät ein Calling Device umfasst.

Gemäß einer vorteilhaften Ausführungsform der Erfindung, deren Merkmale auch mit Merkmalen anderer Ausführungsformen dieser Erfindung kombiniert werden können, ist es vorgesehen, dass das erste Kommunikationsendgerät ein physikalisches Kommunikationsendgerät nach Maßgabe des Anwenders umfasst.

Gemäß einer vorteilhaften Ausführungsform der Erfindung, deren Merkmale auch mit Merkmalen anderer Ausführungsformen dieser Erfindung kombiniert werden können, ist es vorgesehen, dass Anrufe auf dem Preferred Device anstelle des physikalischen Kommunikationsendgeräts initiiert werden.

Gemäß einer vorteilhaften Ausführungsform der Erfindung, deren Merkmale auch mit Merkmalen anderer Ausführungsformen dieser Erfindung kombiniert werden können, ist es vorgesehen, dass die Datenstruktur die zweite Zuordnung bestimmt, wobei in der zweiten Zuordnung nur das physikalische Kommunikationsendgerät als Calling Device festgelegt ist.

Gemäß einer vorteilhaften Ausführungsform der Erfindung, deren Merkmale auch mit Merkmalen anderer Ausführungsformen dieser Erfindung kombiniert werden können, ist es vorgesehen, dass, wenn das Steuerprogramm versucht, einen Anruf an das physikalische Kommunikationsendgerät zu initiieren, der wenigstens eine CTI-Server automatisch einen Anruf an das Preferred Device initiiert, basierend auf der ersten Zuordnung, wobei der hergestellte Anruf in dem Steuerprogramm als ein Anruf an das physikalische Kommunikationsendgerät erscheint, basierend auf der zweiten Zuordnung.

Gemäß einer vorteilhaften Ausführungsform der Erfindung, deren Merkmale auch mit Merkmalen anderer Ausführungsformen dieser Erfindung kombiniert werden können, ist es vorgesehen, dass in der Datenstruktur in der ersten Zuordnung eine erste Connection-ID bestimmt wird, wobei die erste Connection-ID einen Anruf an das zweite Kommunikationsendgerät angibt.

Gemäß einer vorteilhaften Ausführungsform der Erfindung, deren Merkmale auch mit Merkmalen anderer Ausführungsformen dieser Erfindung kombiniert werden können, ist es vorgesehen, dass in der Datenstruktur in der zweiten Zuordnung eine zweite Connection-ID bestimmt wird, wobei die zweite Connection-ID einen Anruf an das erste Kommunikationsendgerät angibt.

Gemäß einer vorteilhaften Ausführungsform der Erfindung, deren Merkmale auch mit Merkmalen anderer Ausführungsformen dieser Erfindung kombiniert werden können, ist es vorgesehen, dass das erste Kommunikationsendgerät und das zweite Kommunikationsendgerät dynamisch gebunden sind.

Gemäß einer vorteilhaften Ausführungsform der Erfindung, deren Merkmale auch mit Merkmalen anderer Ausführungsformen dieser Erfindung kombiniert werden können, ist es vorgesehen, dass der wenigstens eine CTI-Server derart eingerichtet ist, als Antwort auf eine Anweisung von dem Steuerprogramm einen CSTA Call Control Service durchzuführen, wobei die Datenstruktur in der ersten Repräsentation das erste Kommunikationsendgerät in Zusammenhang mit einer ersten Connection-ID als einen Existing Call bestimmt und das erste Kommunikationsendgerät in Zusammenhang mit einer zweiten Connection-ID als einen Initiated Call bestimmt, wobei die Datenstruktur in der zweiten Zuordnung eine dritte Connection-ID als einen Existing Call und eine vierte Connection-ID als einen Initiated Call bestimmt, und wobei die dritte und vierte Connection-ID in Zusammenhang mit dem ersten Kommunikationsendgerät stehen und verschiedenen Calls entsprechen.

Erfindungsgemäß ist ferner ein Computerprogrammprodukt bzw. Computerprogramm für den Aufbau einer Telekommunikationsverbindung vorgesehen, zur Durchführung eines Verfahrens gemäß einem der vorhergehenden Ansprüche. Erfindungsgemäß ist ferner ein maschinenlesbarer Datenträger mit einem auf dem Datenträger gespeicherten Computerprogrammprodukt vorgesehen.

Erfindungsgemäß ist ferner eine Anordnung zum Aufbau einer Telekommunikationsverbindung für einen Anwender, dem ein erstes Kommunikationsendgerät zugeordnet ist, vorgesehen, umfassend: einen CTI-Server; ein dem Anwender zugeordnetes erstes Kommunikationsendgerät; ein zweites Kommunikationsendgerät, das dem ersten Kommunikationsendgerät zuordenbar ist; und ein auf dem CTI-Server für den Aufbau der Telekommunikationsverbindung laufendes Steuerprogramm, in dem eine Zuordnungsinformation bereitgestellt ist, in der für das erste Kommunikationsendgerät nach Maßgabe des Anwenders eine erste Zuordnung bestimmt ist, die eine Zuordnung eines zweiten Kommunikationsendgeräts zu dem ersten Kommunikationsendgerät festlegt, wobei das Steuerprogramm so ausgestaltet ist, dass die Telekommunikationsverbindung von dem Steuerprogramm gemäß der ersten Zuordnung mit dem zweiten Kommunikationsendgerät anstelle mit dem ersten Kommunikationsendgerät aufgebaut wird. Die Anordnung zeichnet sich dadurch aus, dass in der Zuordnungsinformation eine zweite Zuordnung bestimmt ist, wodurch dem Steuerprogramm das erste Kommunikationsendgerät als in der aufgebauten Telekommunikationsverbindung von dem Anwender einzig verwendetes Endgerät signalisiert wird.

Gemäß einer vorteilhaften Ausführungsform der Erfindung, deren Merkmale auch mit Merkmalen anderer Ausführungsformen dieser Erfindung kombiniert werden können, ist es vorgesehen, dass die Zuordnungsinformation eine Datenstruktur umfasst, die für das erste Kommunikationsendgerät die erste Zuordnung bestimmt, wobei vorzugsweise in der ersten Zuordnung das zweite Kommunikationsendgerät in Zusammenhang mit dem ersten Kommunikationsendgerät festgelegt wird.

Es ist klar, dass die Anordnung in vorteilhafter Ausgestaltung jeweils so ausgelegt bzw. eingerichtet ist, dass die beschriebenen Varianten der Verfahrensabläufe ausgeführt werden können. Die Anordnung umfasst somit die jeweiligen Merkmale, die zur Ausführung der entsprechenden Verfahrensschritte erforderlich sind, auch wenn dies nicht explizit dargestellt ist.

Gemäß einer vorteilhaften Ausführungsform der Erfindung, deren Merkmale auch mit Merkmalen anderer Ausführungsformen dieser Erfindung kombiniert werden können, ist es vorgesehen, dass der wenigstens eine CTI-Server eine Eingabe von einem Anwender empfängt, die das zweite Kommunikationsendgerät des Anwenders bestimmt.

Gemäß einer vorteilhaften Ausführungsform der Erfindung, deren Merkmale auch mit Merkmalen anderer Ausführungsformen dieser Erfindung kombiniert werden können, ist es vorgesehen, dass das zweite Kommunikationsendgerät ein Preferred Device umfasst.

Gemäß einer vorteilhaften Ausführungsform der Erfindung, deren Merkmale auch mit Merkmalen anderer Ausführungsformen dieser Erfindung kombiniert werden können, ist es vorgesehen, dass der zumindest eine CTI-Server eine Datenstruktur abruft, die für das erste Kommunikationsendgerät die erste Zuordnung bestimmt.

Gemäß einer vorteilhaften Ausführungsform der Erfindung, deren Merkmale auch mit Merkmalen anderer Ausführungsformen dieser Erfindung kombiniert werden können, ist es vorgesehen, dass in der ersten Zuordnung das zweite Kommunikationsendgerät in Zusammenhang mit dem ersten Kommunikationsendgerät festgelegt ist.

Gemäß einer vorteilhaften Ausführungsform der Erfindung, deren Merkmale auch mit Merkmalen anderer Ausführungsformen dieser Erfindung kombiniert werden können, ist es vorgesehen, dass das erste Kommunikationsendgerät ein Calling Device umfasst.

Gemäß einer vorteilhaften Ausführungsform der Erfindung, deren Merkmale auch mit Merkmalen anderer Ausführungsformen dieser Erfindung kombiniert werden können, ist es vorgesehen, dass das erste Kommunikationsendgerät ein physikalisches Kommunikationsendgerät nach Maßgabe des Anwenders umfasst.

Gemäß einer vorteilhaften Ausführungsform der Erfindung, deren Merkmale auch mit Merkmalen anderer Ausführungsformen dieser Erfindung kombiniert werden können, ist es vorgesehen, dass Anrufe auf dem Preferred Device anstelle des physikalischen Kommunikationsendgeräts initiiert werden.

Gemäß einer vorteilhaften Ausführungsform der Erfindung, deren Merkmale auch mit Merkmalen anderer Ausführungsformen dieser Erfindung kombiniert werden können, ist es vorgesehen, dass die Datenstruktur die zweite Zuordnung bestimmt, wobei in der zweiten Zuordnung nur das physikalische Kommunikationsendgerät als Calling Device festgelegt ist.

Gemäß einer vorteilhaften Ausführungsform der Erfindung, deren Merkmale auch mit Merkmalen anderer Ausführungsformen dieser Erfindung kombiniert werden können, ist es vorgesehen, dass, wenn das Steuerprogramm versucht, einen Anruf an das physikalische Kommunikationsendgerät zu initiieren, der wenigstens eine CTI-Server automatisch einen Anruf an das Preferred Device initiiert, basierend auf der ersten Zuordnung, wobei der hergestellte Anruf in dem Steuerprogramm als ein Anruf an das physikalische Kommunikationsendgerät erscheint, basierend auf der zweiten Zuordnung.

Gemäß einer vorteilhaften Ausführungsform der Erfindung, deren Merkmale auch mit Merkmalen anderer Ausführungsformen dieser Erfindung kombiniert werden können, ist es vorgesehen, dass in der Datenstruktur in der ersten Zuordnung eine erste Connection-ID bestimmt wird, wobei die erste Connection-ID einen Anruf an das erste Kommunikationsendgerät angibt.

Gemäß einer vorteilhaften Ausführungsform der Erfindung, deren Merkmale auch mit Merkmalen anderer Ausführungsformen dieser Erfindung kombiniert werden können, ist es vorgesehen, dass in der Datenstruktur in der zweiten Zuordnung eine zweite Connection-ID bestimmt wird, wobei die zweite Connection-ID einen Anruf an das erste Kommunikationsendgerät angibt.

Gemäß einer vorteilhaften Ausführungsform der Erfindung, deren Merkmale auch mit Merkmalen anderer Ausführungsformen dieser Erfindung kombiniert werden können, ist es vorgesehen, dass das erste Kommunikationsendgerät und das zweite Kommunikationsendgerät dynamisch gebunden sind.

Gemäß einer vorteilhaften Ausführungsform der Erfindung, deren Merkmale auch mit Merkmalen anderer Ausführungsformen dieser Erfindung kombiniert werden können, ist es vorgesehen, dass der wenigstens eine CTI-Server derart ausgestaltet ist, als Antwort auf eine Anweisung von dem Steuerprogramm einen CSTA Call Control Service durchzuführen, wobei die Datenstruktur in der ersten Zuordnung das erste Kommunikationsendgerät in Zusammenhang mit einer ersten Connection-ID als einen Existing Call bestimmt und das erste Kommunikationsendgerät in Zusammenhang mit einer zweiten Connection-ID als einen Initiated Call bestimmt, wobei die Datenstruktur in der zweiten Zuordnung eine dritte Connection-ID als einen Existing Call und eine vierte Connection-ID als einen Initiated Call bestimmt, und wobei die dritte und vierte Connection-ID in Zusammenhang mit dem ersten Kommunikationsendgerät stehen und verschiedenen Calls entsprechen.

Die Erfindung ermöglicht ein Verfahren, das es nun auch High-Level-Applikationen erlaubt, ohne komplexe Kenntnis des jeweiligen - dynamisch änderbaren - Preferred Device Leistungsmerkmale auf einfache Art und Weise mittels CTI durchzuführen.

Die vorteilhafte Modellierung ohne physikalische Darstellung der aktuellen (dynamisch änderbaren) Konfiguration vereinfacht die CTI-Steuerung von Preferred-Device-Konstellationen durch High-Level-Applikation ohne die bislang erforderlichen komplexen Kenntnisse der jeweiligen Preferred-Device-Konstellation. Der Anwender kann gleichzeitig ein oder mehrere Preferred Devices nutzen, ohne dass seine Applikationen spezielle Informationen über die Anschaltung, den Ort (insbesondere im IP-Umfeld) und den Typ des aktuellen Preferred Devices benötigen. Dies wird durch die Repräsentation bzw. Zuordnung eines einzigen logischen CTI-Devices (Büronummer-Device) bei gleichzeitiger Steuerung desselben ermöglicht.

Dadurch ergeben sich folgende neue Aspekte für Preferred-Device-Konstellationen steuernde High-Level-Applikationen:
- verbesserte Benutzerführung;
- vereinfachter Implementierungsalgorithmus;
- Unabhängigkeit von Typ des Device (Büronummer-D. und Preferred D.);
- gleichzeitiger Betrieb von mehreren High-Level-Applikationen möglich;
- paralleler Betrieb zur Endgeräte-Steuerung möglich.

Im Folgenden wird die Erfindung anhand vorteilhafter Ausführungsbeispiele und mit Hilfe der Figuren näher beschrieben.

### Dabei zeigt

Fig. 1 in schematischer Weise eine konventionelle Anordnung, um ein Preferred Device zu implementieren (One Number Service der OpenScape Voice);
Fig. 2 in schematischer Weise eine weitere konventionelle Anordnung, um ein Preferred Device zu implementieren (CallMe-Service der OpenScape Office);
Fig. 3 in schematischer Weise das dynamische Binden des Anrufs in dem System von Fig. 2;
Fig. 4 in schematischer Weise die Beziehung zwischen Anrufen, Devices und Verbindungen gemäß dem CSTA-Standard;
Fig. 5 in schematischer Weise einen CSTA Call Control Event Report, der im System von Fig. 2 benutzt ist;
Fig. 6 in schematischer Weise CSTA Call Control Services, die im System von Fig. 2 benutzt werden, nämlich (a) Verbindungsänderungen und (b) den entsprechenden Event Report, im Fall "Consultation Service Request" [Quelle: OpenScape Voice];
Fig. 7 in schematischer Weise einen vereinfachten CSTA Call Control Event Report, der zur Durchführung eines Ausführungsbeispiels eines erfindungsgemäßen Verfahrens im System von Fig. 2 benutzt ist;
Fig. 8 in schematischer Weise ein sog. dynamic binding des Ausführungsbeispiels von Fig. 7;
Fig. 9 in schematischer Weise einen CSTA Call Control Event Report 94 für einen vereinfachten CSTA Call Control Service, der zur Durchführung eines Ausführungsbeispiels eines erfindungsgemäßen Verfahrens im System von Fig. 2 benutzt ist; und
Fig. 10 die Devices, die in OpenScape Office für den CallMe-Service unterstützt sind.

Ausführungsformen der Erfindung werden in beispielhafter Weise bezüglich bestimmter CTI-basierter Telekommunikationssysteme erklärt, nämlich OpenScape Voice bzw. OpenScape Office. Solche Systeme sind gemäß dem CSTA-Standard (Computer-Supported Telephony Applications) von ECMA (http://www.ecma-international.org/activities/Communications/TG11/cstalll.htm) erstellt. Es ist aber klar, dass auch verschiedene andere Systeme als Basis für die Implementierung der Erfindung zur Verfügung stehen.

Sofern nicht anders angegeben, können einzelne Designmerkmale des Systems, Kombinationen von Komponenten, Verfahrensschritte oder andere hier offenbarte Techniken entsprechend den Ausführungsformen der vorliegenden Erfindung mit jedem oder allen anderen Designmerkmalen des Systems, Kombinationen von Komponenten, Verfahrensschritten oder anderen hier offenbarten Techniken kombiniert werden.

### A. Aktuelle Implementierung der OpenScape Voice und OpenScape Office.

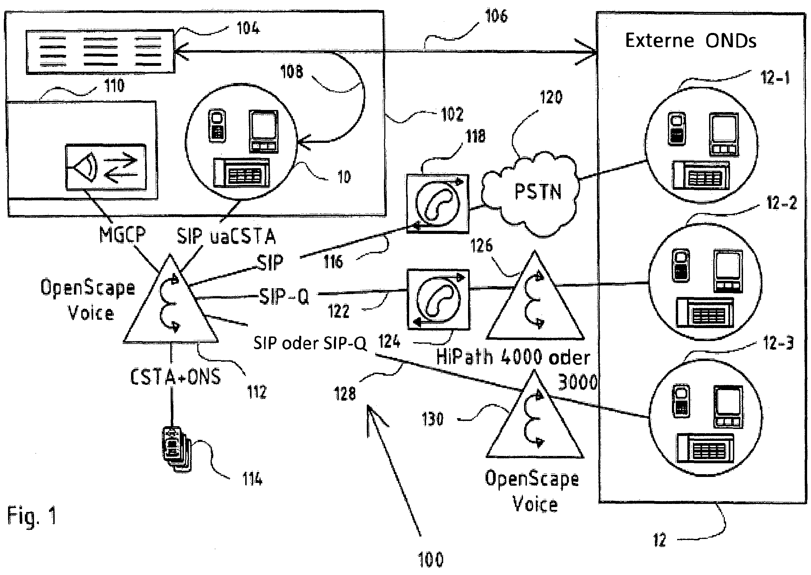

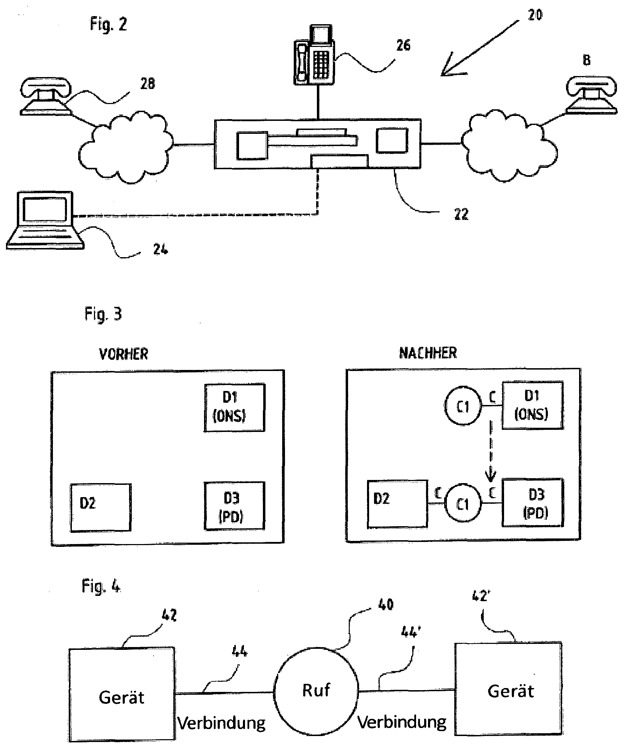

Bei sogenannten Preferred-Device-Applikationen wie dem One Number Service der OpenScape Voice und dem CallMe-Service der OpenScape Office existiert eine nahezu identische Definition des sogenannten Preferred Device (siehe Fig. 1 und Fig. 2).

Fig. 1 zeigt in schematischer Weise eine konventionelle Anordnung, um ein bevorzugtes Gerät (Preferred Device) zu implementieren, entsprechend dem Eine-Nummer-Service (One Number Service; "ONS") der OpenScape Voice ("OSV"). Das Telekommunikationssystem 100 umfasst ein Steuerprogramm (Teilsystem) 102, welches entsprechend in der Software enthalten ist, in welchem eine Anzahl von Teilnehmer-IDs 104 als Teil des ONS registriert sind.

Hier können Preferred Devices, Interne One Number Devices (ONDs) 10 oder Externe ONDs 12 bestehen. Externe Verbindungen 106 können zwischen Teilnehmer-IDs 104 und externen ONDs 12 hergestellt werden, wie nachfolgend ausführlich beschrieben wird. Externe ONDs 12 sind entsprechend assoziierte (nicht-registrierte) Geräte. Zusätzlich können interne Verbindungen 108 zwischen Teilnehmer-IDs 104 und internen (registrierten) ONDs 10 hergestellt werden. Letztere können Telefone, MLHQ-Piloten (eine Komponente namens "Multiple Hunt Group" bei OpenScape Voice bzw. HiPath 8000 von Unify GmbH & Co. KG) oder OSMO-Klienten (eine weitere Komponente bei OSV) umfassen. One Number Service soll nicht nur mit internen Endgeräten durchgeführt werden (internal binding), sondern auch mit externen Geräten (Hotelapparat, Mobiltelefon).

Das Teilsystem 102 umfasst einen Media Server 110, welcher eine MLHG-Warteschleife(MLHG = Multiple Hunt Group, für OSV geplant) (Hold Queue) ausführt. Der Mediaserver 110 dient zum Anschalten von Tönen oder Ansagen im Gespräch. Werden mit SIP-Endgeräten applikationsgesteuert Gespräche aufgebaut, ist es unter Umständen notwendig, beispielsweise einen Rufton oder Besetztton einzuschalten, was mit dem Mediaserver 110 durchgeführt wird. Sämtliche Gespräche laufen über den Mediaserver, damit ein Ton, eine Ansage oder ähnliches in das Gespräch einfließen kann.

Das Telekommunikationssystem 100 umfasst einen Softswitch (Software-implementierten Switch) 112, der zur Kommunikation mit dem Mediaserver 110 über MGCP-Protokoll und mit den internen ONDs 10 über SIP- oder uaCSTA-Protokoll (User Agent CSTA, d.h. CSTA über SIP; vgl. http://wiki.siemens-enterprise.com/wiki/uaCSTA) ausgestaltet ist. Der Softswitch 112 ist ausgestaltet, um mit zusätzlichen Devices Verbindungen aufzubauen, wie weiter unten ausführlicher beschrieben wird. An den SoftSwitch 112 kann man über SIP und uaCSTA die SIP-Endgeräte anschalten, intern für ONDs 10, MLHQ-Geräte, OSMO-Klienten usw: Dies sind Endgeräte, die ein OSV anmelden kann.

An die OSV werden über SIP und uaCSTA Endgeräte 114 angebunden und mit CSTA und dem ONS, der über CSTA übetragen wird, wird eine UC-Applikation (Unified Communication) erstellt, die ONS unterstützt. UC (ONS) ist ein wichtiger Bestandteil von UC, der ermöglicht, mit einer Rufnummer überall erreichbar zu sein.

Der Softswitch 112 ermöglicht unter Benutzung des SIP-Protokolls über ein Fremdgateway 118 und das PSTN 120 die Herstellung von Verbindungen 116 mit externen ONDs 12-1. Ebenso ermöglicht der Softswitch 112 unter Benutzung des SIP-Q-Protokolls über ein Fremdgateway 124 Verbindungen 122 und die Bereitstellung des Softswitch 126 mit externen ONDs 12-2. Ferner ermöglicht der Softswitch 112 Verbindungen 128 unter Benutzung von SIP- oder SIP-Q-Protokoll und die Herstellung eines zweiten OSV-Softswitches 130 mit externen ONDs 12-3.

Die vorliegende OpenScape Office dagegen ist eine Hardware, welche auch als Softswitch ausgebildet sein kann.

Fig. 2 zeigt in schematischer Weise eine weitere konventionelle Anordnung, um ein Preferred Device zu implementieren (CallMe-Service der OpenScape Office). OpenScape Office kann dabei als Hardware oder auch als Softswitch ausgebildet sein.

Wie in Fig. 2 gezeigt, kann das Telekommunikationssystem 20 ein Telekommunikationsverbindungssystem oder Steuerprogramm (hier OpenScape Office; "OSO") 22 umfassen. Bei dem Telekommunikationsverbindungssystem 22 kann dabei die Nutzung eines oder mehrerer CTI Server (nicht gezeigt), eines Client-PCs (Laptop) 24 oder anderer Computer vorgesehen sein. Ein Nutzer verfügt über ein ONS-Gerät (Physical Device) 26 in seinem Büro. Zusätzlich besitzt der Nutzer ein ONS-Gerät (ONS Device; "OND") 28.

### Begriffserläuterung:

- ONS - Ein One Number Subscriber Device (ONS-Gerät) 26, das sich an OpenScape Office registriert hat (Tischapparat, Büronummer), ist ein bestehendes Gerät mit einer Teilnehmer-ID (Subscriber ID), die dem OpenScape Office zugeordnet ist.
- OND - Ein One Number Service Device 28 ist das zugehörige Gerät, das im Auftrag des ONS benutzt wird, das zur Laufzeit, wenn ein Anruf eingeht, aktiv wird für das ONS. OND muss eine wählbare Nummer innerhalb des DNS-Wählplans sein. OND kann sich irgendwo befinden, in OpenScape Office, im Netzverbund, im Hotel.

### Definition: Preferred Device = OND

Somit ist das ONS Device 26 das der Büronummer und das Preferred Device (OND) 28 das dynamisch in das jeweilige Gespräch gebundene Device (dynamic binding). Dieses Preferred Device 28 ist örtlich unabhängig und kann sich im eigenen Knoten, im Netzverbund oder auch im Central Office befinden.

### Beispiel

Benutzer A ruft Benutzer B unter seiner Rufnummer 5.10 an. Hat Benutzer B das One-Number-Service-Feature aktiviert, bleibt die Rufnummer von Benutzer B gleich 510, hinter dieser Nummber befindet sich Benutzer B jedoch bespielsweise im Hotel oder am Handy (OND Device 28, internal und external binding). Das Device kann sich irgendwo befinden, der Anruf geht auf der Rufnummer 510 ein, der Teilnehmer für Rufnummer 510 befindet sich jedoch woanders und möchte den Anruf dort auf einem Device erhalten, wo er sich aufhält.

ONS stellt dabei das Device 26 der Büronummer, OND 28 das über dynamic binding dynamisch in das jeweilge Gespräch gebundene Device dar.

OpenScape Voice hat eine 1 :n-Zuordnung, wobei für einen Teilnehmer gleichzeitig mehrere Preferred Devices oder ONDs 28 möglich sind. Es kann entschieden werden, welches Preferred Device genutzt werden soll. In OpenScape Office hingegen liegt eine 1:1-Zuordnung vor, das heißt, wurde einmal ein Device ausgewählt, wird dieses immer genutzt.

Fig. 3 zeigt in schematischer Weise das dynamic binding von Anrufen in dem System von Fig. 2. Wenn kein Gespräch für den ONS 26 vorhanden ist, dann ist OND 28 auch nicht mit dem ONS 26 logisch verknüpft. Dies geschieht nur bei einem kommenden oder gehenden Ruf. Befindet sich der OND 28 innerhalb des Switch 22, kann die Verknüpfung auch statisch erstellt werden. Befindet sich der OND 28 jedoch außerhalb der gezeigten Figur, muss der OND 28 über den Trunk erreicht werden. Der Trunk ist die angestrebte Resource, es wird festgestellt, weiche Trunk für den ONS 26 aktiv wird, wobei man von dynamic binding spricht. Das Preferred Device gibt dem Benutzer demzufolge die Identität des ONS Subscribers anstelle seiner eigenen.

### Dynamische Verbindung (Dynamic Bindung).

Aufgrund des Dynamic Binding benutzen Anrufe auf zugehörigen Devices (Preferred Device 28) die Identität des ONS Subscribers anstatt des zugehörigen Devices (Preferred Device). Das sogenannte dynamic binding (dynamisches Binden) ermöglicht es dem Anwender, sich am Preferred Device 28 unter seiner Büronummer bekanntzugeben. Dieses gilt sowohl für kommende als auch gehende Gespräche (s. Fig. 3).

Im folgenden Beispiel legt der Benutzer das Device D3 als sein Preferred Device 28 fest. Das dynamische Binden vom Büronummer-Device (D1) erfolgt im Gesprächsaufbau zu Device D2.

Hierbei gelten (auch im weiteren Verlauf) folgende Kürzel.
- C1, C2...Cn: Anruf (Call ID)
- c: Status der Verbindung - connected
- D1,D2,D3...Dn: Teilnehmergerät (Device)
- D1C1: Verbindung (Connection-ID)
- ONS: One Number Service Subscriber (Büronummer)
- OND: One Number Service Device
- PD: Preferred Device
D1 ist der ONS, Büroapparat
D2 ist der Anrufer
D3 ist das Preferred Device.
Wenn D1 den D2 ruft oder D2 den D1 ruft, dann verläuft der Sprechweg (unter anderem) zwischen D2 und D3, aus Sicht der Applikation mit Dynamic Binding wird D1 in das Gespräch eingeschaltet (wobei der gestrichelte Pfeil in Fig. 3 die logische Verknüpfung zwischen D1 und D3 darstellen soll).

Wie in Fig. 3 gezeigt, sind Verbindungen D1C1 and D3C1 dynamisch gebunden. D1, D2 oder D3 ist das Device, C1 ist der Call, die Verbindung dazwischen ist die Connection (siehe auch Fig. 4).

### Verbindung

Eine Verbindung (z.B. D1C1) ist eine Beziehung in einer vermittelnden Sub Domain zwischen einem CSTA-Device (D1,D2,D3...Dn) und einem Anruf (C1, C2...Cn), in den dieses CSTA-Device (D1,D2,D3...Dn) involviert ist. Diese Verbindungsbeziehung kann sowohl überwacht als auch manipuliert werden. Fig.4 zeigt die Beziehung zwischen Anrufen 40, Geräten (Devices) 42, 42' und Verbindungen 44, 44' gemäß dem CSTA-Standard.

Die Überwachung und Manipulation dieser Verbindungen sind die Grundlage für Call Control Services (wie z. B. Clear Connection, Answer Call usw.). Verbindungen sind CSTA-Objekte mit den folgenden Merkmalen: Connection-IDentifier ("Connection-ID") (Verbindungs-Identifier).

Jede Verbindung, die überwacht und/oder kontrolliert werden kann, wird innerhalb des Servicebereichs gekennzeichnet. Dafür wird jeder Verbindung ein einzigartiger Identifier von der Vermittlungsfunktion zugeordnet. Dieser Identifier umfasst einen Device Identifier und einen Call Identifier. Für einen Anruf gibt es so viele Verbindungs-Identifier wie zugehörige Devices, und für ein Device gibt es so viele Verbindungs-Identifier wie zugehörige Anrufe. Der Connection-IDentifier ist innerhalb einer Sub Domain und innerhalb eines Single Service Bereichs einzigartig. Er wird von der Vermittlungsfunktion zugeordnet, wenn entweder ein neuer Anruf eingeht oder ein neues Device in einen Anruf involviert wird. Ein Verbindungs-Identifier kann sich infolge einiger Abläufe (z. B. Übermittlung oder Konferenz) verändern, in diesem Fall übermittelt die Vermittlungsfunktion die entsprechende Information an die Computerfunktion, um sie von den alten Identifiern an die neuen Identifier zu übertragen. Der in der Verbindung benutzte Device Identifier kann von der Verbindungsfunktion entweder statisch oder dynamisch zugeordnet sein.

### B. CSTA Call Control Event Report

### a) OpenScape Voice

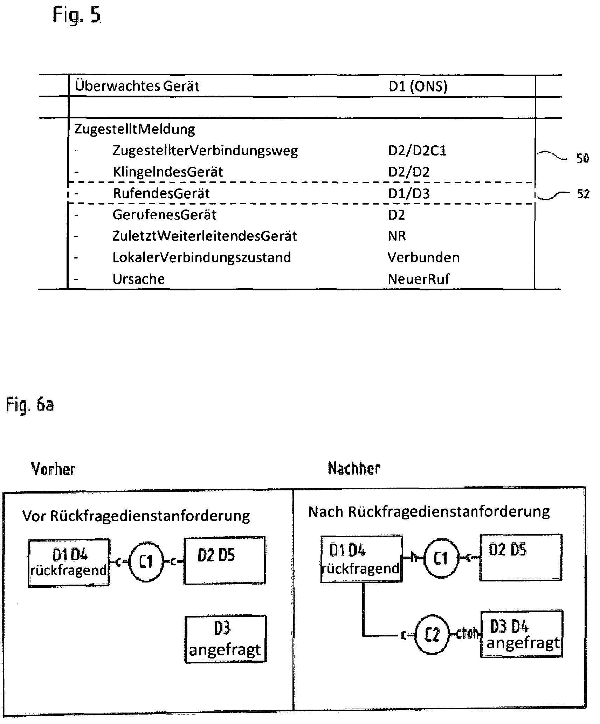

Fig. 5 zeigt in schematischer Weise einen CSTA Call Control Event Report, der im System von Fig. 2 benutzt ist [Quelle: OpenScape Voice]. Der CSTA Event Report 50 entspricht dem Inhalt einer Datenstruktur, in der die relevanten Geräte-, Anruf- und Verbindungsinformationen gespeichert sind. Der CSTA Event Report 50 der OpenScape Voice am Büronummer-Device D1 (ONS) stellt hier deutlich heraus, welches physikalische Preferred Device D3 aktuell genutzt wird. In Fig. 5 ist es in Feld 52 (Calling Device) durch das pipe Symbol "|" dargestellt (=> D1|D3 - vgl. Fig. 3).

In CSTA XML erfolgt die Darstellung durch einen privaten XML Tag: <callingDevice>N<+14084922343>;ond=+16504001800</callingDevice>

Der in Fig. 5 gezeigte Event Report findet zwischen OpenScape Voice und ONS UC Application statt (CSTA plus ONS), wie unten links in Fig. 1 gezeigt. Die Berichte sind für die Applikation des Endusers geeignet. Die Kommunikation findet zwischen Switch 112 der OpenScape Voice und UC-Applikation auf dem Gerät 114 statt. Dies ist in der Figur nicht dargestellt, die Applikation ist in OpenScape Office bereits enthalten.

Das Dynamische Binden des ONS-Devices D1 mit dem Preferred Device D3 stellt sich im Event Report 50 der OpenScape Voice (Fig. 5) wie folgt dar: xml-codiert.

D1 ist das logische Device, welches auf der D3 arbeitet. Das Calling Device ist ein ONS-Anteil. Die Applikation weiß dabei zu jeder Zeit, an welchem physikalischen Device das ONS-Device gerade dynamisch gebunden ist

D4 ist jetzt das Preferred Device. Findet das Gespräch am Preferred Device statt und man möchte eine Rückfrage machen (Consultation Call Request), geschieht dies über die Applikation, über den Client wird gleichzeitig das Gespräch und das Preferred Device gesteuert. Die Applikation weiß, dass der Anwender D4 als Preferred Device dynamisch in das Gespräch eingebunden hat, sie agiert als D1 und möchte eine Rückfrage vornehmen. In diesem Fall muss gemäß Stand der Technik die Applikation das Signal aussenden, dass für D1 am Device D4 eine Rückfrage vorgenommen werden soll.

### b) OpenScape Office

Ein CSTA Event Report am Büronummer-Device D1 (ONS) findet beim CallMe-Service der OpenScape Office bislang nicht statt.

### C. CSTA Call Control Services

### a) OpenScape Voice

Die Erfinder haben für die Applikation festgestellt, dass die Applikation jederzeit wissen muss, welche Physik sich hinter dynamic binding verbirgt. Dies ist jedoch kompliziert und für eine kostengünstige Applikation zu aufwendig. Vorteilhafter wäre, über mehrere Applikationen zu verfügen, die das Feature ohne den Aufwand nutzen können, mit dynamic binding alles erklären zu müssen (hoher Implementierungsaufwand und kostspielig). Zudem besteht die Gefahr einer Kollision, wie sich eine Applikation im Parallelbetrieb zu einer zweiten Applikation verhält, wenn beide Applikationen gleichzeitig auf das Preferred Device zugreifen wollen.

Dieses Problem soll mit der Einführung einer Zwischenschicht gelöst werden, die eine zusätzliche Datenstruktur aufweist.

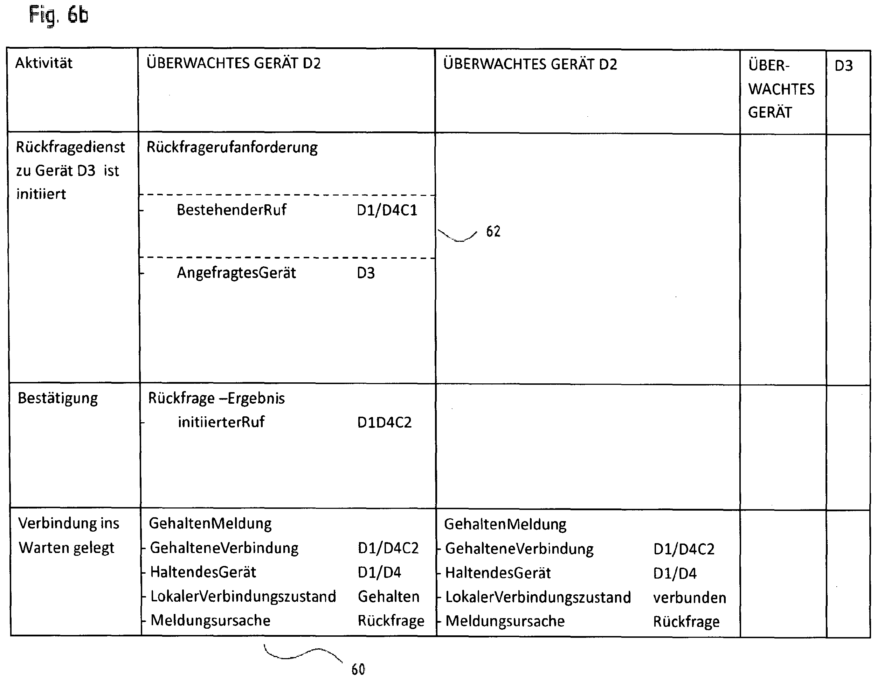

Fig. 6 zeigt in schematischer Weise CSTA Call Control Services, die im System von Fig. 2 benutzt werden, nämlich (a) Verbindungsänderungen und (b) den entsprechenden Event Report 60, im Fall "Consultation Service Request" [Quelle: OpenScape Voice].

Verbindungsorientierte CSTA Call Control Services der OSV (auch bekannt als: H8K) für das Büronummer-Device D1 werden unter Bekanntgabe des aktuell gebundenen physikalischen Preferred Device *(hier: D4) abgesetzt (DI|D4).

Ein Consultation Call (ohne ONS addressing an das consulted Device target) soll ausgeführt werden. Dieser Service hält einen bestehenden aktiven Anruf C1 (gezeigt auf der linken Seite von Fig. 6(a) und Fig. 6(b), Feld 62) auf einem Device in der Warteschleife und veranlasst einen neuen Anruf C2 von demselben Device (gezeigt auf der rechten Seite von Fig. 6(a)).

OND-Format wird für D1 und D2, nicht jedoch für D3 genutzt. Daher sollte OSV ein offered Event (d.h. Ruf anbieten und OSV verteilt den Ruf) an D3 senden und OS v3 das Device für D3 in einem Deflect Request auswählen lassen.
D1|D4 - ONSSubscriber D1 benutzt OND D4.
D2|D5 - ONSSubscriber D2 benutzt OND D5.
D3 - ONSSubscriber D3 benutzt OND D6.
D1|D4 und D2|D5 sind in Established state. Nun hält D1|D4 Rücksprache mit D3.

Bei dem vereinfachten Event Report D1 auf D3 erfolgt aus Applikationssicht eine vereinfachte Präsentation. Im nachhinein soll eine Applikation ermöglichen, ohne Kenntnis des akutell gebundenen dynamisch änderbaren Preferred Device steuernd auf diese Verbindung einzuwirken.

Bei einem weiteren Vereinfachungsschritt kann folgendes implementiert werden:
Wie oben ausgeführt, hat die OpenScape Voice die Connection miteinander verbunden. Das Binden der Connection wirkt sich so aus, dass beim Ausrufen eines Service genau diese Connection erkannt werden
muss. In der Datenstruktur wird nicht die Connection verbunden, sondern nur das Device. D1 ist an D3 gebunden, und eine Kopplung kann erreicht werden zwischen Verbindung D1 und D3. Implentierungsabhängig können zwei unterschiedliche Verbindungen vorliegen, im vorliegenden Fall C1 und C2. Während in der OpenScape Voice immer C1 vorliegt, können hier auch C1 und C2 vorliegen.
Durch die Datenhaltung wurde erreicht, dass das entkoppelt ist, woraufhin dann einfach lediglich noch D1 und D3 gekoppelt werden und nicht die Verbindung. Somit kann der Consultation Call von der High-Level-Applikatiön auf D1 abgesetzt werden, und das entsprechende Preferred Device D4 wird aufgrund der Datenhaltung gebunden. Teilsystem 102 in Fig.1 ist, was die High-Level-Applikation schickt. D1, die Zwischenschicht, macht intern aus D1 D4 und würde den Consultation Call direkt auf das Preferred Device absetzen. Consultation Call ist Rückfrage. ("Bitte warten" während des Anrufs), dann zurück zum Gespräch oder Konferenzcall.

Bei einem kommenden oder gehenden Anruf handelt es sich um eine 1:1-Zuordnung, soll jedoch ein dritter Teilnehmer dazugeschaltet werden, oder soll zwischen Teilnehmern hin und her geschaltet werden, wird dies schwierig.

Gemäß der Ausführungsform gibt es eine Zwischenschicht, welche diese Aufgabe für die Applikation übernimmt.

### Definitionen:

Die automatische Umwertung der rechten Spalte vom Büronummer-Device auf das Preferred Device (Datenstruktur) kann im embedded System erfolgen oder in einer Zwischenschicht. Im Ergebnis gelangt der Service Request von der Applikation an die Plattform, und die Plattform an der Switch erkennt, ob dies erfolgreich war (positives oder negatives Ergebnis)

### b) OpenScape Office

Verbindungsorientierte CSTA Call Control Services wie Rückfrage, Makeln, Übergeben, etc., werden für das Büronummer-Device D1 (ONS) beim CallMe-Service der OpenScape Office bislang nicht unterstützt.

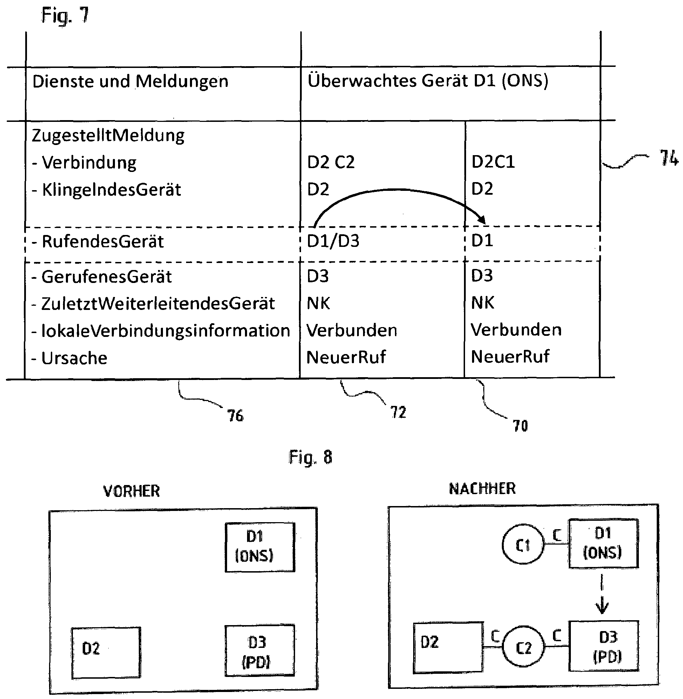

Fig. 7 zeigt in schematischer Weise einen vereinfachten CSTA Call Control Event Report 76, der zur Durchführung eines Ausführungsbeispiels eines erfindungsgemäßen Verfahrens im System von Fig. 2 benutzt wird, nämlich einen vereinfachten CSTA Call Control Event Report am Büronummer-Device (ONS). Der CSTA Event Report 76 entspricht dem Inhalt einer Datenstruktur, in dem die relevanten Geräte-, Anruf- und Verbindungsinformationen gespeichert sind.

Die Erfindung löst das Problem, indem durch das Setzen des Monitorpunktes auf das Büronummer-Device D1 (logisches CTI-Device) die auf Plattformebene entsprechend erzeugten bezüglich dem Preferred Device (physikalisches CTI-Device) orientierten CTI-Meldungen vom physikalisch orientierten Inhalt in den logischen Anteil in der Art umgewertet werden, dass die High-Level-Applikation nur noch das logische CTI-Device (Büronummer-Device - ONS) sieht (s. Fig. 7, Feld 74, Spalte 70). Spalte 70 entspricht einer zweiten Zuordnung, und Spalte 72 einer ersten Zuordnung (vgl. Fig. 5).

In CSTA XML erfolgt damit die Umwertung wie folgt: <callingDevice>N<+14084922343>; ond=+16504001800<calling Device> => <callingDevice>N<+14084922343></calling Device>

Somit ergibt sich aus Applikationssicht eine vereinfachte Präsentation, die die CTI-Leistungsmerkmal-Steuerung ohne Kenntnis des aktuell gebundenen (dynamisch änderbaren) Preferred Device erlaubt.

Fig. 8 zeigt in schematischer Weise ein dynamic binding des Ausführungsbeispiels von Fig. 7. Im Vergleich zur Fig. 3 reicht hier ein dynamisches Binden der Devices aus. Devices D1 und D3 sind dynamisch gebunden (ONS => PD).

Dieses Vorgehen ermöglicht eine Entkopplung der beiden Verbindungen D1C1 und D3C2. Implementierungsabhängig kann C1 jedoch identisch zu C2 sein.

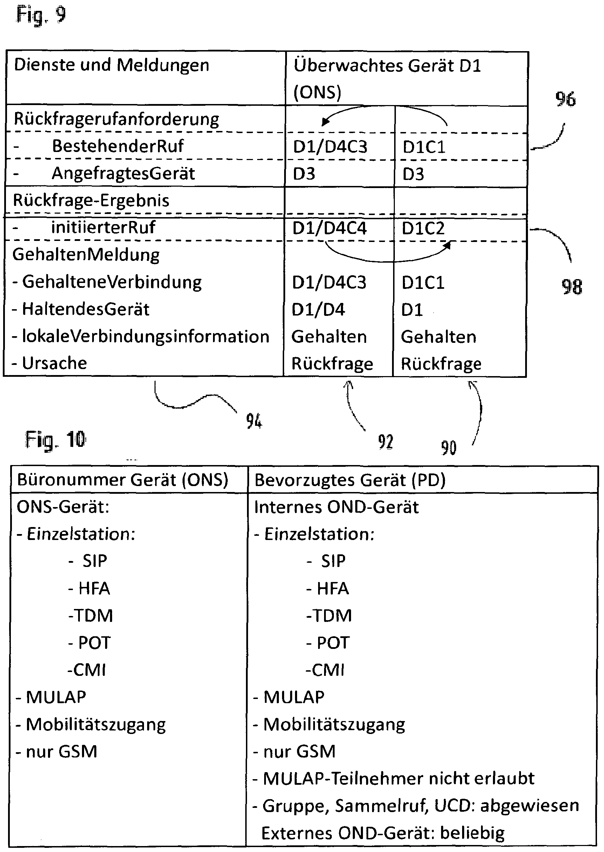

Fig. 9 zeigt in schematischer Weise einen CSTA Call Control Event Report 94 für einen vereinfachten CSTA Call Control Service, der zur Durchführung eines Ausführungsbeispiels eines erfindungsgemäßen Verfahrens im System von Fig. 2 benutzt wird, nämlich ein vereinfachter CSTA Call Control Service am Büronummer-Device (ONS) im Fall "Consultation Service Request". Der CSTA Event Report 94 entspricht dem Inhalt einer Datenstruktur, in dem die relevanten Geräte-, Anruf- und Verbindungsinformationen gespeichert sind.

Feld 96 zeigt das Gerät (D1) und die Verbindung (D4C3) für den bestehenden Anruf (existingCall), und Feld 98 zeigt das Gerät (D1) und die Verbindung (D4C4) für den neuen Anruf (initiatedCall). Im Vergleich zur Fig. 6 erlaubt nun die Erfindung einer High-Level-Applikation die Durchführung eines verbindungsorientierten CSTA Call Control Services am Büronummer-Device D1 (s. Fig. 9 - Spalte 90) ohne Kenntnis des aktuell gebundenen physikalischen Preferred Device (hier: D4 bzw. D1|D4 - vgl. Fig. 6). Spalte 90 entspricht einer zweiten Zuordnung, und Spalte 92 einer ersten Zuordnung (s. Fig. 6).

Die automatische Umwertung der rechten Spalte 90 vom Büronummer-Device D1 auf das Preferred Device (D1 => D4) und den zugehörigen Call (C1 => C3) in der linken Spalte 92 kann sowohl in der Plattform als auch in einer geeigneten Middleware erfolgen.

Das positive als auch negative Ergebnis wird wie bei den CSTA Call Control Events entsprechend umgesetzt. Im Zusammenhang mit der hier beschriebenen Umwertung können nun vorteilhaft für CSTA Call Control Service relevante Zustandsdaten sowohl für das Büronummer-Device (ONS bzw. D1C1) als auch für das Preferred Device (PD bzw. D4C3) unabhängig voneinander überprüft werden. Dabei muss sich das Preferred Device in einem aktiven Gespräch befinden (D4C3 = connected), um erfolgreich eine Rückfrage zu starten. Ansonsten wird der angeforderte CSTA Call Control Service abgewiesen.

Die Kopplung von D1 und D4 sowie C1 und C3 ermöglicht weitergehende Prüfungen. D1 ist dabei der Büroapparat, welcher sich physikalisch in Ruhe befindet, denn das Gespräch findet physikalisch über das Device D4 statt. Bei einer Rückfrage auf D1 stellt sich somit das Problem, dass sich D1 in Ruhe befindet und ein aktives Gespräch benötigt wird. D1 greift daraufhin auf D4 zu, D4 befindet sich in aktivem Gespräch, und eine Rückfrage wird ermöglicht. Das bedeutet, man kann aus der Zuordnung von D1 und D3 sowie der Zuordnung von C1 und C3 für den Service entsprechende Überprüfungen vornehmen.

### Beispiel

Das beschriebene Verfahren ist allgemeingültig auf die vorliegenden Endgerätetypen anwendbar. Die OpenScape Voice hat SIP und SIP-Q, im vorliegenden Fall ist eine bedeutend größere Vielfalt an Endgerätetypen zu berücksichtigen.

Figuren 7 und 9 sind Ausführungsbeispiele der vorliegenden Erfindung. One Number Service der OpenScape Voice ist für die Call Control möglich. Verschiedene Funktionalitäten aus dem Standard CSTA, Kapitel 14, können implementiert werden. Klasse 17 beschäftigt sich mit der Call Control.

Durch diese Art des dynamischen Bindings, das heißt durch das call-bezogene dynamische Binding, ist das beschriebene Verfahren auch für andere Services und Eventklassen anwendbar; siehe ECMA 269in logical Device Features oder in CII associated Features sind passende Funktionalitäten zu finden.

Befindet sich das Preferred Device im eigenen Knoten, erlaubt das hier aufgezeigte Verfahren ebenfalls die parallele Steuerung von verbindungsbezogenen Leistungsmerkmalen am Preferred Device.

Fig. 10 zeigt die Devices, die in OpenScape Office für den CallMe-Service unterstützt sind (Quelle: OpenScape Office).

Wenn OpenScape Voice etwas ausführt, muss nur bei SIP und SIP-Q geprüft werden, es ist nicht diese Vielfalt an Endgerätetypen wie in OpenScape Office vorhanden. Daher erfolgte die Gegenüberstellung, welche ONS-Devices und welche Preferred Devices es geben kann.

Die hier aufgezeigte Erfindung ist unabhängig vom gewählten Büronummer-Device (ONS) und Preferred Device (OND) und kann somit in jeder Kombination der oben aufgeführten Devices angewendet werden.

Das hier beschriebene Verfahren ist auch für andere CSTA Service und Eventklassen (z.B. Logical Device Services und Events) anwendbar.

Vorteile der vorliegenden Erfindung sind u.a.:
- Bessere Benutzerführung, vereinfachter Implementierungsalgorithmus (von Interesse für Hersteller).
- Büronummer-Device und Preferred Device sind unabhängig voneinander.
- Vereinfachte Präsentationsschicht: Durch die Modellierung etwas weiter nach rechts im Bild erreicht man nicht nur Call Control, sondern auch Logical Device Services und die Ermöglichung weiterer intelligenter Prüfungen sowie die Umwertung durch die geschickte Datenhaltung und somit eine Kopplung.

Es ist festzuhalten, dass die unter Bezug auf die dargestellten Ausführungsformen beschriebenen Merkmale der Erfindung, wie beispielsweise CTI-Server, Media Server, Steuerprogramm, Datenstrukturen, Event Reports (die Art und Ausgestaltung der verwendeten Parameter, Steuerbefehle, Protokolle und Hardware-Komponenten, die Anordnung der einzelnen Komponenten relativ zueinander oder die Abfolge der jeweiligen Verfahrensschritte) auch bei anderen Ausführungsformen oder Varianten hiervon vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

### Abkürzungen

- ACD: Automatic Call Distribution
- API: Application Programming Interface
- CSTA: Computer Supported Telecommunications Applications
- C1, C2, C3: Verbindung (Connection)
- D1, D2, D3: (Teilnehmer) Device
- ECMA-269: Standard ECMA-269. Services for Computer Supported Telecommunications Applications (CSTA) Phase III. 9th edition (December 2011).
- FP: Feature Processing
- f(...): Funktion von ...
- MS: Media Server
- MGCP: Media Gateway Control Protocol
- MLHG: Multiple Hunt Group
- OND: One Number Service Device
- ONS: One Number Service
- OSCC: OpenScape Contact Center
- OSMO: Komponente bei OSV
- OSO: OpenScape Office
- OSV: OpenScape Voice
- PSTN: Public Switched Telephone Network
- SIP: Session Initiation Protocol
- SIP-Q: Vernetzungsprotokoll CorNet-NQ über SIP getunnelt
- SST: CSTA Service Single Step Transfer
- Trk 1, Trk 2(Netzwerk): Trunk
- UC: Unified Communication application
- UCD: Universal Call Distribution (ACD-Lösung der OpenScape Office und OpenScape Smart Office)

### Liste der Bezugszeichen mit features

- 10: Interne One Number Devices (ONDs)
- 12: Externe ONDs
- 12-1: Externe ONDs
- 12-2: Externe ONDs
- 12-3: Externe ONDs
- 20: Telekommunikationssystem
- 22: Steuerprogramm
- 24: Client-PC (Laptop)
- 26: ONS-Gerät (Physical Device)
- 28: OND-Gerät (ONS Device; "OND")
- 40: Anruf
- 42, 42': Geräte (Devices)
- 44, 44': Verbindungen
- 50: CSTA Event Report bzw. Datenstruktur
- 52: Feld
- 60: Event Report
- 62: Feld
- 70: zweite Zuordnung
- 72: erste Zuordnung
- 74: Feld
- 76: Control Event Report
- 90: zweite Zuordnung
- 92: erste Zuordnung
- 94: CSTA Call Control Event Report
- 96: Feld
- 98: Feld
- 100: Telekommunikationssystem
- 102: Steuerprogramm (Teilsystem)
- 106: Verbindung
- 108: Verbindung
- 104: Teilnehmer-IDs
- 110: Media Server
- 112: Softswitch
- 114: Endgeräte
- 116: Verbindungen
- 118: Fremdgateway
- 120: PSTN
- 122: Verbindungen
- 124: Fremdgateway
- 126: Softswitch
- 128: Verbindungen
- 130: zweiter OSV-Softswitch

## Patentansprüche

1. Verfahren zum Aufbau einer Telekommunikationsverbindung (C1, C2, C3) für einen Anwender, dem ein erstes Kommunikationsendgerät (D1) zugeordnet ist, umfassend die folgenden Schritte:
einem auf einem CTI-Server für den Aufbau der Telekommunikationsverbindung (C1, C2, C3) laufenden Steuerprogramm (102, 22) wird eine Zuordnungsinformation bereitgestellt, in der für das erste Kommunikationsendgerät (D1) nach Maßgabe des Anwenders eine erste Zuordnung (72, 92) bestimmt ist, die eine Zuordnung eines zweiten Kommunikationsendgeräts (D3, D4) zu dem ersten Kommunikationsendgerät (D1) festlegt; und
die Telekommunikationsverbindung (C1, C2, C3) wird von dem Steuerprogramm (100, 22) gemäß der ersten Zuordnung mit dem zweiten Kommunikationsendgerät (D3, D4) anstelle mit dem ersten Kommunikationsendgerät (D1) aufgebaut;
**dadurch gekennzeichnet, dass**
in der Zuordnungsinformation eine zweite Zuordnung (70, 90) bestimmt wird, wodurch dem Steuerprogramm (100, 22) das erste Kommunikationsendgerät (D1) als in der aufgebauten Telekommunikationsverbindung (C1, C2, C3) von dem Anwender einzig verwendetes Endgerät signalisiert wird.

2. Verfahren nach Anspruch 1, **dadurch gekennzeichnet, dass** der CTI-Server eine Datenstruktur (50) abruft, die für das erste Kommunikationsendgerät (D1) die erste Zuordnung (72, 92) bestimmt, wobei vorzugsweise in der ersten Zuordnung (72, 92) das zweite Kommunikationsendgerät (D3, D4) in Zusammenhang mit dem ersten Kommunikationsendgerät (D1) festgelegt wird.

3. Verfahren nach Anspruch 2, **dadurch gekennzeichnet, dass** die Datenstruktur (50) die zweite Zuordnung (70, 90) bestimmt, wobei in der zweiten Zuordnung (70, 90) nur das physikalische Kommunikationsendgerät (D1) als Calling Device festgelegt ist.

4. Verfahren nach Anspruch 3, **dadurch gekennzeichnet, dass**
das erste Kommunikationsendgerät (D1) ein physikalisches Kommunikationsendgerät (D1) nach Maßgabe des Anwenders umfässt und das zweite Kommunikationsendgerät (D3, D4) ein Preferred Device umfasst und,
wenn das Steuerprogramm versucht, einen Anruf (C1) an das physikalische Kommunikationsendgerät (D1) zu initiieren, der CTI-Server automatisch einen Anruf (C2) an das Preferred Device (D3, D4) initiiert, basierend auf der ersten Zuordnung (72, 92), wobei der hergestellte Anruf (C2) in dem Steuerprogramm (100, 22) als ein Anruf (C1) an das physikalische Kommunikationsendgerät erscheint, basierend auf der zweiten Zuordnung (70, 90).

5. Verfahren nach einem der Ansprüche 2 bis 4, **dadurch gekennzeichnet, dass** in der Datenstruktur (50) in der ersten Zuordnung (72, 92) eine erste Connection-ID (D2C2) bestimmt wird, wobei die erste Connection-ID einen Anruf (C2) an das zweite Kommunikationsendgerät (D3) angibt, wobei vorzugsweise in der Datenstruktur (50) in der zweiten Zuordnung (70, 90) eine zweite Connection-ID (D2C1) bestimmt wird, wobei die zweite Connection-ID einen Anruf (C1) an das erste Kommunikationsendgerät (D1) angibt.

6. Verfahren nach einem der Ansprüche 2 bis 5, **dadurch gekennzeichnet, dass** der CTI-Server derart eingerichtet ist, als Antwort auf eine Anweisung von dem Steuerprogramm (100, 22) einen CSTA Call Control Service durchzuführen, wobei
die Datenstruktur (50) in der ersten Zuordnung (72, 92) das erste Kommunikationsendgerät (D1) in Zusammenhang mit einer ersten Connection-ID (D4C3) als einen Existing Call bestimmt und das erste Kommunikationsendgerät (D1) in Zusammenhang mit einer zweiten Connection-ID (D4C4) als einen Initiated Call bestimmt,
wobei die Datenstruktur (50) in der zweiten Zuordnung (70, 90) eine dritte Connection-ID (D1C1) als einen Existing Call und eine vierte Connection-ID (D1C2) als einen Initiated Call bestimmt, und
wobei die dritte und vierte Connection-ID in Zusammenhang mit dem ersten Kommunikationsendgerät (D1) stehen und verschiedenen Calls (C1, C2) entsprechen.

7. Computerprogrammprodukt für den Aufbau einer Telekommunikationsverbindung, zur Durchführung eines Verfahrens gemäß einem der vorhergehenden Ansprüche.

8. Maschinenlesbarer Datenträger mit einem auf dem Datenträger gespeicherten Computerprogrammprodukt gemäß Anspruch 7.

9. Anordnung zum Aufbau einer Telekommunikationsverbindung (C1, C2, C3) für einen Anwender, dem ein erstes Kommunikationsendgerät (D1) zugeordnet ist, umfassend:
einen CTI-Server;
ein dem Anwender zugeordnetes erstes Kommunikationsendgerät (D1);
ein zweites Kommunikationsendgerät (D3, D4), das dem ersten Kommunikationsendgerät (D1) zuordenbar ist; und
ein auf dem CTI-Server für den Aufbau der Telekommunikationsverbindung (C1, C2, C3) laufendes Steuerprogramm (100, 22), in dem eine Zuordnungsinformation bereitgestellt ist, in der für das erste Kommunikationsendgerät (D1) nach Maßgabe des Anwenders eine erste Zuordnung (72, 92) bestimmt ist, die eine Zuordnung eines zweiten Kommunikationsendgeräts (D3, D4) zu dem ersten Kommunikationsendgerät (D1) festlegt; wobei das Steuerprogramm (100, 22) so ausgestaltet ist, dass die Telekommunikationsverbindung (C1, C2, C3) von dem Steuerprogramm (100, 22) gemäß der ersten Zuordnung mit dem zweiten Kommunikationsendgerät (D3, D4) anstelle mit dem ersten Kommunikationsendgerät (D1) aufgebaut wird;
**dadurch gekennzeichnet, dass**
in der Zuordnungsinformation eine zweite Zuordnung (70, 90) bestimmt ist, wodurch dem Steuerprogramm (100, 22) das erste Kommunikationsendgerät (D1) als in der aufgebauten Telekommunikationsverbindung (C1, C2, C3) von dem Anwender einzig verwendetes Endgerät signalisiert wird.

10. Anordnung nach Anspruch 9, **dadurch gekennzeichnet, dass** die Zuordnungsinformation eine Datenstruktur (50) umfasst, die für das erste Kommunikationsendgerät (D1) die erste Zuordnung (72, 92) bestimmt, wobei vorzugsweise in der ersten Zuordnung (72, 92) das zweite Kommunikationsendgerät (D3, D4) in Zusammenhang mit dem ersten Kommunikationsendgerät (D1) festgelegt wird.

## Claims

1. Method for establishing a telecommunication connection (C1, C2, C3) for a user to whom a first communication terminal (D1) is assigned, comprising the following steps:
a piece of assignment information is made available to a control program (102, 22) running on a CTI server for the purpose of establishing the telecommunication connection (C1, C2, C3), and in that information a first assignment (72, 92) is defined for the first communication terminal (D1) as specified by the user, with the first assignment defining the assignment of a second communication terminal (D3, D4) to the first communication terminal (D1); and
the telecommunication connection (C1, C2, C3) is established by the control program (100, 22) according to the first assignment, using the second communication terminal (D3, D4) instead of the first communication terminal (D1);
**characterized in that**
t he assignment information defines a second assignment (70, 90) whereby the first communication terminal (D1) is reported to the control program (100, 22) as being the only terminal used by the user in the established telecommunication connection (C1, C2, C3).

2. Method as in claim 1, **characterized in that** the CTI server calls up a data structure (50) that defines the first assignment (72, 92) for the first communication terminal (D1), wherein preferably in the first assignment (72, 92) the second communication terminal (D3, D4) is defined together with the first communication terminal (D1).

3. Method as in claim 2, **characterized in that** the data structure (50) defines the second assignment (70, 90), and in the second assignment (70, 90) only the physical communication terminal (D1) is defined as a calling device.

4. Method as in claim 3, **characterized in that**
the first communication terminal (D1) comprises a physical communication terminal (D1) as specified by the user and the second communication terminal (D3, D4) comprises a preferred device, and
when the control program attempts to initiate a call (C1) to the physical communication terminal (D1), the CTI server automatically initiates a call (C2) to the preferred device (D3, D4), based on the first assignment (72, 92), wherein the call (C2) made appears in the control program (100, 22) as a call (C1) to the physical communication terminal, based on the second assignment (70, 90).

5. Method as in one of Claims 2 to 4, **characterized in that** a first connection ID (D2C2) is defined in the data structure (50) in the first assignment (72, 92), wherein the first connection ID makes a call (C2) to the second communication terminal (D3), wherein preferably a second connection ID (D2C1) is defined in the data structure (50) in the second assignment (70, 90), wherein the second connection ID indicates a call (C1) to the first communication terminal (D1).

6. Method as in one of claims 2 to 5, **characterized in that** the CTI server is configured to carry out a CSTA Call Control Service in response to a command from the control program (100, 22), wherein
the data structure (50) in the first assignment (72, 92) defines the first communication terminal (D1) together with a first connection ID (D4C3) as an existing call and defines the first communication terminal (D1) together with a second connection ID (D4C4) as an initiated call,
wherein the data structure (50) in the second assignment (70, 90) defines a third connection ID (D1C1) as an existing call and a fourth connection ID (D1C2) as an initiated call, and
wherein the third and fourth connection IDs are related to the first communication terminal (D1) and correspond to different calls (C1, C2).

7. Computer program product for establishing a telecommunication connection, to be used in executing a method according to one of the preceding claims.

8. Machine-readable data carrier with a computer program product according to claim 7 stored on the data carrier.

9. System for establishing a telecommunication connection (C1, C2, C3) for a user to whom a first communication terminal (D1) is assigned, comprising:
a CTI server;
a first communication terminal (D1) assigned to the user;
a second communication terminal (D3, D4) that can be assigned to the first communication terminal (D1); and
a control program (100, 22) running on the CTI server for the purpose of establishing the telecommunication connection (C1, C2, C3), in which a piece of assignment information is generated that defines a first assignment (72, 92) for the first communication terminal (D1) as specified by the user, with the first assignment defining the assignment of a second communication terminal (D3, D4) to the first communication terminal (D1); wherein the control program (100, 22) is configured such that the telecommunication connection (C1, C2, C3) is established by the control program (100, 22) according to the first assignment, using the second communication terminal (D3, D4) instead of the first communication terminal (D1).
**characterized in that**
the assignment information defines a second assignment (70, 90) whereby the first communication terminal (D1) is reported to the control program (100, 22) as being the only terminal used by the user in the established telecommunication connection (C1, C2, C3).

10. Method as in claim 9, **characterized in that** the assignment information includes a data structure (50) that defines the first assignment (72, 92) for the first communication terminal (D1), wherein preferably in the first assignment (72, 92) the second communication terminal (D3, D4) is defined together with the first communication terminal (D1).

## Revendications

1. Procédé pour établir une liaison de télécommunication (C1, C2, C3) pour un utilisateur auquel est attribué un premier terminal de communication (D1), comprenant les étapes suivantes :
fournir à un programme de commande (102, 22), exécuté sur un serveur CTI pour établir la liaison de télécommunication (C1, C2, C3), une information d'attribution dans laquelle est déterminée une première attribution (72, 92) pour le premier terminal de communication (D1) selon les spécifications de l'utilisateur, ladite attribution déterminant une attribution d'un deuxième terminal de communication (D3, D4) au premier terminal de communication (D1) ; et
établir la liaison de télécommunication (C1, C2, C3) par le programme de commande (100, 22) selon la première attribution avec le deuxième terminal de communication (D3, D4) au lieu du premier terminal de communication (D1) ;
**caractérisé en ce que** dans l'information d'attribution, une deuxième attribution (70, 90) est déterminée par laquelle le premier terminal de communication (D1) est signalé au programme de commande (100, 22) comme le terminal utilisé exclusivement par l'utilisateur au cours de la liaison de télécommunication (C1, C2, C3) établie.

2. Procédé selon la revendication 1, **caractérisé en ce que** le serveur CTI extrait une structure de données (50) qui détermine la première attribution (72, 92) pour le premier terminal de communication (D1), dans lequel de préférence dans la première attribution (72, 92), le deuxième terminal de communication (D3, D4) est spécifié en relation avec le premier terminal de communication (D1).

3. Procédé selon la revendication 2, **caractérisé en ce que** la structure de données (50) détermine la deuxième attribution (70, 90), dans lequel dans la deuxième attribution (70, 90), seul le terminal de communication (D1) physique est spécifié comme dispositif appelant (« calling device »).

4. Procédé selon la revendication 3, **caractérisé en ce que** le premier terminal de communication (D1) comprend un terminal de communication (D1) physique selon les spécifications de l'utilisateur et le deuxième terminal de communication (D3, D4) comprend un dispositif préféré (« preferred device »), et
lorsque le programme de commande essaie de lancer un appel (C1) au terminal de communication (D1) physique, le serveur CTI lance automatiquement un appel (C2) au dispositif préféré (D3, D4) sur la base de la première attribution (72, 92), dans lequel l'appel (C2) établi apparaît dans le programme de commande (100, 22) comme un appel (C1) au terminal de communication physique sur la base de la deuxième attribution (70, 90).

5. Procédé selon l'une quelconque des revendications 2 à 4, **caractérisé en ce que** dans la structure de données (50) dans la première attribution (72, 92), une première ID de connexion (D2C2) est déterminée, dans lequel la première ID de connexion indique un appel (C2) au deuxième terminal de communication (D3), dans lequel de préférence dans la structure de données (50) dans la deuxième attribution (70, 90), une deuxième ID de connexion (D2C1) est déterminée, dans lequel la deuxième ID de connexion indique un appel (C1) au premier terminal de communication (D1).

6. Procédé selon l'une quelconque des revendications 2 à 5, **caractérisé en ce que** le serveur CTI est aménagé de telle sorte qu'il effectue un service de commande d'appel (« call control service ») CSTA en réponse à une instruction du programme de commande (100, 22), dans lequel
dans la première attribution (72, 92), la structure de données (50) détermine le premier terminal de communication (D1) en relation avec une première ID de connexion (D4C3) comme un appel existant (« existing call ») et le premier terminal de communication (D1) en relation avec une deuxième ID de communication (D4C4) comme un appel lancé (« initiated call »),
dans lequel dans la deuxième attribution (70, 90), la structure de données (50) détermine une troisième ID de connexion (D1C1) comme un appel existant et une quatrième ID de connexion (D1C2) comme un appel lancé, et
dans lequel les troisième et quatrième ID de connexion sont associées au premier terminal de communication (D1) et correspondent à différents appels (C1, C2).

7. Produit de programme informatique pour établir une liaison de télécommunication pour exécuter un procédé selon l'une quelconque des revendications précédentes.

8. Support de données lisible par machine, comprenant un produit de programme informatique selon la revendication 7 stocké sur le support de données.

9. Système pour établir une liaison de télécommunication (C1, C2, C3) pour un utilisateur auquel est attribué un premier terminal de communication (D1), comprenant :
un serveur CTI ;
un premier terminal de communication (D1) attribué à l'utilisateur ;
un deuxième terminal de communication (D3, D4) pouvant être attribué au premier terminal de communication (D1) ; et
un programme de commande (100, 22) exécuté sur le serveur CTI pour établir la liaison de télécommunication (C1, C2, C3) et dans lequel est fournie une information d'attribution dans laquelle une première attribution (72, 92) est déterminée pour le premier terminal de communication (D1) selon les spécifications de l'utilisateur qui spécifie une attribution d'un deuxième terminal de communication (D3, D4) au premier terminal de communication (D1) ; dans lequel le programme de commande (100, 22) est réalisé de telle sorte que la liaison de télécommunication (C1, C2, C3) est établie par le programme de commande (100, 22) selon la première attribution avec le deuxième terminal de communication (D3, D4) au lieu du premier terminal de communication (D1) ;
**caractérisé en ce que** dans l'information d'attribution, une deuxième attribution (70, 90) est déterminée par laquelle le premier terminal de communication (D1) est signalé au programme de commande (100, 22) comme le terminal utilisé exclusivement par l'utilisateur au cours de la liaison de télécommunication (C1, C2, C3) établie.

10. Système selon la revendication 9, **caractérisé en ce que** les informations d'attribution comprennent une structure de données (50) qui détermine la première attribution (72, 92) pour le premier terminal de communication (D1), dans lequel de préférence dans la première attribution (72, 92), le deuxième terminal de communication (D3, D4) est spécifié en relation avec le premier terminal de communication (D1).
